# NEW EUROPEAN PATENT SPECIFICATION

(11) **EP 1 646 188 B2**
(45) Date of publication and mention of the opposition decision: **03.10.2018**
(45) Mention of the grant of the patent: 15.06.2011
(21) Application number: 03739963.1
(22) Date of filing: 20.06.2003
(51) Int. Cl.: H04L 12/46

(54) **A METHOD FOR ETHERNET NETWORK SERVICE SAFETY ISOLATION**
VERFAHREN ZUR ETHERNET-NETZWERK-DIENST-SICHERHEITS-ISOLATION
PROCEDE D'ISOLATION SECURISE DE SERVICES DE RESEAU ETHERNET

(43) Date of publication of application: 12.04.2006
(73) Proprietor: ZTE Corporation, Shenzhen, Guangdong 518057 (CN)
(72) Inventor: JIA, Minghong ZTE Plaza, Shenzhen City 518057 Guangdong Province (CN); YOU, Yong ZTE Plaza, Shenzhen City 518057 Guangdong Province (CN); XU, Lingbo ZTE Plaza, Shenzhen City 518057 Guangdong Province (CN)
(74) Representative: AWA Sweden AB
(86) International application number: PCT/CN2003/000478
(87) International publication number: WO 2004/114605

(56) References cited:
- EP-A- 1 244 254
- EP-A2- 1 318 631
- CN-A- 1 356 806
- CN-A- 1 400 540
- JP-A- 2003 078 548
- US-A1- 2003 037 163
- US-A1- 2003 110 268

## Description

### Technical Field

The present invention relates to a method for security isolation of Ethernet services, particularly to a method for the realization of Virtual Private Network (VPN) on Layer 2 Ethernet, which is used by the telecommunication service providers to provide Ethernet services.

### Background of the Invention

Ethernet was originally applied in local area network (LAN) whose users are mainly enterprise internal users, which means that the number of users is rather small. When the number of users is increased, higher level of equipment is employed to realize the connection of a plurality of Ethernets.

With the rapid development and wide application of Ethernet, it is also applied to wide area network (WAN). To meet the requirement of further development, VLAN (refer to IEEE 802.1Q) is introduced in Ethernet technology. VLAN is used for security isolation to restrict the broadcast area of the data.

Patent application document EP1318631A2 discloses address resolution methods used in vitual private network (VPN). According to this document, an address resolution request message is transmitted by a first customer edge (CE) device on plural layer 2 virtual circuits of its provider edge (PE) interface. The address resolution request message including the layer 3 address allocated to a second CE device of the VPN. In response to reception of such request message at the second CE device, an address resolution response message is returned to the first CE device. In response to reception of this response message, the first CE device maps the layer 3 address allocated to the second CE device to a virtual LAN identifier of the layer 2 virtual circuit on which the response message is received.

The document US2003110268A1 discloses a virtual private network (VPN) service provided through a shared network infrastructure comprising interconnected provider edge (PE) devices having customer edge (CE) interfaces. Some of the CE interfaces are allocated to a VPN supporting virtual LANs. A correspondence between a CE interface and a virtual LAN is learnt on the basis of tagged frames received at this CE interface and including an identifier of this virtual LAN. The learning process permits the detection of pairs of CE interfaces which correspond to a common virtual LAN. Upon such detection, a virtual circuit is established in the shared network infrastructure between the PE devices having these CE interfaces, and subsequently used for forwarding frames including the identifier of the common virtual VLAN.

The document US2003037163A1 discloses a communication method: processing for designation of a service provider, user authentication, and IP address assignment is performed by exchanging management frames between a user terminal and a service provider through an access network; and main-signal frames each having an IPoE form and containing a source Layer 2 address of the user terminal are exchanged between the user terminal and the service provider through the access network. The management frames have a form which can be discriminated from the main-signal frames in Layer 2, and the access network holds information on correspondences between source Layer 2 addresses and virtual private networks. The access network recognizes one of the virtual private networks connected to the service provider, based on the source Layer 2 address contained in each main-signal frame, and transfers the main-signal frames in Layer 2 by MAC bridging.

The document EP1244254 A discloses a VLAN classification and tagging system for a switching node. During VLAN classification, an inbound packet is assigned to a VLAN in accordance with a classification mode selectable from a PASS, FORCE, and PROTOCOL modes. In PASS mode, the packet is assigned to a VLAN associated with a VLAN ID from the packet. In FORCE mode, the packet is assigned to a VLAN associated with an ingress port. In PROTOCOL mode, the packet is assigned to a VLAN associated with a protocol type of the packet. During VLAN tagging, a VLAN identifier in an outbound packet is modified or not in accordance with a tagging mode selectable from a PASS, FORCE, and REMOVE modes. In PASS mode, the VLAN ID in the packet is retained as received. In FORCE mode, the VLAN ID in the packet is replaced with a VLAN ID to which the packet was classified at inbound. In REMOVE mode, the VLAN ID from the packet is removed without substitution.

But the newly introduced VLAN technology is enterprise-oriented which is effective and efficient for the Ethernet of an enterprise. If a service provider employs VLAN to realize security isolation of Ethernet services when providing services to several enterprises, the following problems will occur:
the VLAN configuration provided by the service provider might conflict with the enterprise's original VLAN configuration;
an enterprise has lots of VLAN services, some of which does not have a valid ID beforehand;
too many VLAN settings might make the administration too complicated or even not administrable;
there is a limited number of VLAN ID; theoretically, a device can support 4096 VLANs simultaneously that are shared by all users, resulting in an insufficient number of VLANs;
the L2 switch technology employing VLAN only completes data isolation, but does not really implement complete virtual bridge in the MAC address table; and
two interfaces in traditional L2 devices can not be looped, making it less measurable.

### Summary of the Invention

The purpose of the present invention is to overcome such problem that the application of VLAN is limited to single-enterprise Ethernet, solve the security isolation problem faced by service providers when providing Ethernet/VLAN services to a plurality of enterprises, and to provide a method to realize VPN technology on Layer 2 Ethernet. With this method, this invention can provide a complete virtual bridge to make the data transfer transparent and improve the operational capability and measurability of the Ethernet services.

The technical solution of the present invention is as defined in claim 1. Further improvements and embodiments are provided in the dependent claims. Also provided is a method for realizing security isolation of Ethernet services, comprising the following steps:
1) adding an additional segment in a Ethernet frame for identifying different user services, the segment consists of n bytes and n has a value related to the format of the segment;
2) entering a user service into data networks of a service provider, and adding a user ID in the additional segment of the Ethernet frame carrying the user service;
3) processing switch/route;
4) deleting the user ID and restoring the Ethernet frame when the user service leaves the data networks, wherein when the user service is processed on a certain physical interface, the user ID of the user service is compared with the user ID of the physical interface, if the two ID match, the user service will get through, otherwise the service will be discarded.

In the step 2), the user service entering into a physical interface is marked in a certain format by a user ID assigned to the physical interface connecting the user service.

In the step 3), based on the user ID, a unique MAC address table is maintained for each user ID by learning and searching MAC addresses; a unique spanning-tree is generated on the physical interface included in each user ID to form a real virtual bridge; in said virtual bridge same MAC address may be used in MAC address tables of different user IDs.

In the step 3), a unique spanning-tree is generated for each user ID to avoid broadcast storm.

In the step 3), the uses of VLAN IDs for different user IDs are completely isolated, and a user may also use VLAN IDs to realize internal network isolation.

In the step 3), at the physical interfaces connecting the user service, internal service isolation is set upon whether using the VLAN ID or not by selecting ways of using the VLAN ID through network management.

In the step 3), a unique multicast service mode may be provided for each user ID, in which the multicast service mode comprises a dynamic multicast protocol mode and a static multicast configuration mode;
the dynamic multicast protocol mode means that a service interface in the multicast service is determined by the dynamic multicast protocol, and the dynamic multicast protocol comprises Protocol ICMP and Protocol GMRP (Refer to RFC 2236 and IEEE 802.1q);
the static multicast configuration mode determines the service interface in the multicast service by manual configuration of the user through network management.

In the step 3), each user ID configures the multicast service mode by means of network management. The service mode includes dynamic multicast protocol mode and static multicast configuration mode.

In the step 2), a user ID is assigned to each physical interface. When entering the interface a service is marked with a user ID. The user ID keeps unchanged in the whole network until the service leaves the interface and reaches a user device. Then the user ID is removed, and finally the service reaches the user device. By this means a service is transferred transparently.

The additional segment in the Ethernet frame may use the following format: compatible MPLS format, stackable VLAN format or custom format, to realize connection among a plurality of devices.

Configuration options are set at the physical interfaces through network management to provide compatible MPLS, stackable VLAN and custom formats to the additional segment in the Ethernet frame.

The service isolation method according to the present invention has the following characteristics comparing with the present VLAN techniques (IEEE 802.1Q): realizing full function virtual bridge without concerning with the VLAN in the user service; decreasing the complexity of administration and improving the independency of the devices; and being adoptable to Ethernet services provided by telecommunication service providers.

This method has the following effects:
1. Service provider does not need to know the original VLAN configuration of the customer. The original VLAN configuration does not need to be changed.
2. The customer can change its VLAN configurations freely. It can modify or add service without the help of the service provider. The user service does not even need to have a VLAN ID.
3. Service provider only configures user ID, which is simple to realize.
4. If an n bit of user ID is used, 2<n> users can be accommodated. Each user can use 4096 VLAN independently, which solves the problem of limited numbers of VLAN.
5. By learning the MAC address and the customer ID, complete virtual bridge can be really realized in the MAC address table.
6. Different multicast services can be configured according to the customer requirements.
7. The measurability of the L2 switch devices is improved. With the realization of the above virtual bridge, a device can be tested by building a service test channel between a plurality of virtual bridges.

### Brief Description of the Drawings

Fig.1 is the schematic of service testing by using the method according to an example of the present invention;
Fig.2 is the flowchart of one example according to the present invention;
Fig.3 is the schematic of supporting customer VLAN by using the method according to an example of the present invention;
Fig.4 is the schematic of using user ID to realize service isolation;
Fig.5 is the Ethernet VLAN frame format;
Fig.6 is the stackable VLAN frame format;
Fig.7 is the MPLS frame head format.

### Detailed Description of the Invention

A method for isolation of Ethernet services according to an example of the present invention comprises the following:
An additional segment is added to an Ethernet frame, and the data in the segment is defined as a user ID consisting of n byte for identifying a user's service. When the user service enters a service provider's data network, the Ethernet frame is changed accordingly. When the user service leaves the data network, the Ethernet frame is restored to the original format.

Firstly a user ID is assigned to the physical interface connecting the user service, to mark the user ID to the service entering the physical interface. Then, when a service is entering a physical interface, the user ID of the service is compared with the user ID of the interface. If the two IDs match, the service gets through.

By using the user ID, one Ethernet device is turned into a plurality of virtual Ethernets, and all virtual Ethernets work independently without interfering one another.

Due to the present of the user ID, a unique MAC address table may be maintained for each customer by learning and searching the user ID + MAC address. Meanwhile a unique spanning-tree is used in the physical interface included in each user ID. Moreover, an independent multicast may be used for each user ID, which includes dynamic multicast and static multicast. As a result, a real virtual bridge is generated. With this virtual bridge, different users can use the same MAC address and different dynamic multicast protocol or static multicast configurations respectively.

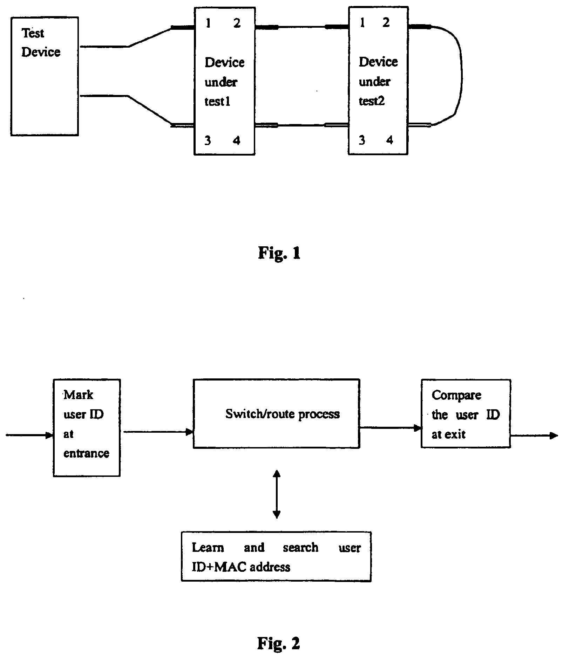

In Fig. 1, a loop test is done on two devices. Here (a, b) stands for interfaces, a is a device-under-test number, while b is an interface number. (1, 1), (1, 2), (2, 1), (2, 2) are user ID N, (1, 3), (1, 4), (2, 3), (2, 4) are user ID M, N#M. A service from a test device first enters (1, 1), here it is marked with user ID N; then the same service leaves (1, 2) and enters (2, 1); then it leaves (2, 2), where the user ID N is deleted. The service leaving (2, 2) then enters (2, 4), where it is marked with user ID M; then the same service leaves (2, 3) and enters (1, 4); then leaves (1, 3) and enters the test device, where the user ID M is deleted. The same function can be realized in the reverse way.

In Fig.2, a service is marked with user ID first at entrance; then it passes through switch/route; at the same time the user ID + MAC address are learnt and searched. When the service processed through switch/route arrives at exit, the user ID of the service is compared with the user ID of the interface. If two ID don't match then the service will be discarded.

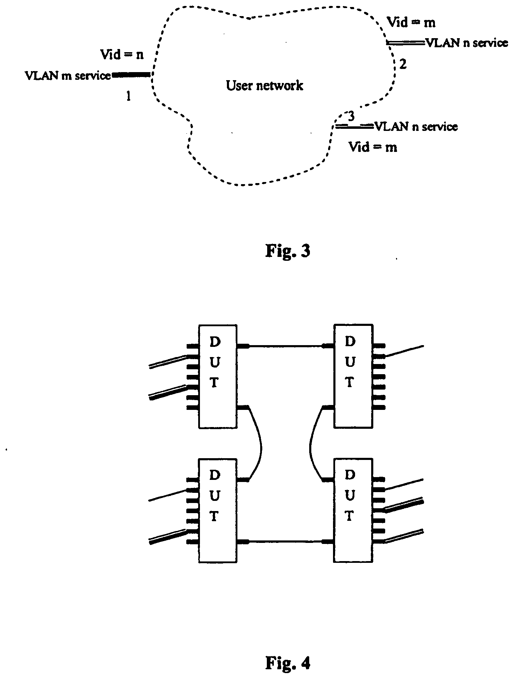

In Fig.3, the customer service network is marked with a user ID. A VLAN n service is transferred from 2, 3 to 1, while a VLAN m service is transferred from 1 to 2, 3. VLAN between the interfaces 2 and 3 helps to isolate the data so that they don't mix.

Fig. 4 is a typical WAN connection. Different lines stand for different services isolated by user IDs. Services with different user IDs don't mix. Each user ID has a unique spanning-tree, which helps to avoid broadcast storm. The use of VLAN ID among different user IDs is completely isolated. A customer can choose to use VLAN IDs to isolate internal services or not to use them. DUT is device under test.

An example according to the present invention is described as the following:
Step 1: Marking a service with a user ID.

A user ID may be set for each physical interface. When the service enters the interface it is first marked with the user ID that will keep unchanged throughout the network until the service leaves the interface and arrives at the user device. Then the user ID is deleted and the service reach the user device. As a result the service is transferred transparently.

### Step 2: Isolation of the service

Each physical interface has a user ID configured by the user. When the service needs to leave the interface, the user ID of the service is compared to the user Id of the interface. If the two ID do not match, the service is discarded.

### Step 3: Realization of real virtual bridge

If the device is a switch bridge, adding the user ID to the learning and searching of the MAC address will generate a unique MAC address table for each user ID. A unique spanning-tree may run for each user ID, and a unique multicast may also run for each user ID. The unique multicast includes dynamic multicast protocol and static multicast configuration. As a result the interface for each user ID works as a real virtual bridge.

The flowchart of the above procedure is shown in Fig.2.

### Step 4: Isolating the user internal service by using VLAN ID

A user can realize VLAN on a device through configuration. With the user ID, the VLAN is limited to the interfaces within the devices marked with the user ID. As a result it will not interfere with other user's service. A user may also not use VLAN and only transfer the VLAN service transparently.

The flowchart of the above procedure is shown in Fig. 3.

A plurality of services may be flexibly isolated by techniques described above, shown in Fig. 4.

### 5. Realization of the frame format

When changing an Ethernet frame format, the international standard should be taken into account since both compatibility and interconnectivity should be concerned. Otherwise devices from different manufactures will not be able to work together. If there is no specific international standard, problems such as compatible MPLS and stackable VLAN format should be considered. If a device can be connected to a plurality of different devices, configuration options may be set at the interfaces to support different formats. Configuration options for user IDs may include: not using, using MPLS format, using stackable VLAN format, and using custom format.

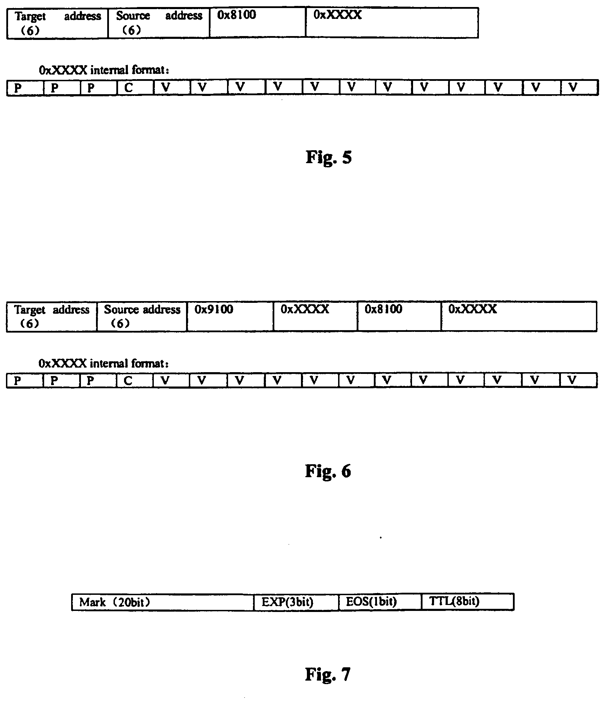

Fig. 5, 6 and 7 show optional frame formats.

Fig. 5 shows the VLAN frame format defined by IEEE 802.1Q, in which 0x8100 is the VLAN frame ID, 0xXXXX is the data of VLAN ID, in which P, C and V, P stands for priorities from 0-7; C is the type of LAN, 0 is Ethernet, 1 is Token-ring. V is VLAN ID with a value from 0 to 4095.

Fig. 6 shows the frame format used by stackable VLAN. 0x9100 is the stackable VLAN ID and 0xXXXX is the data of the VLAN ID, the definition of which is the same as VLAN ID. All the other settings are the same as IEEE 802.1q.

Fig.7 shows the MPLS frame format defined by RFC2236. ID is MPLS ID. Exp is for storage and use for test. EOS shows if it's at the end of the MPLS stack. TTL is time to live.

## Claims

1. A method for realizing security isolation of Ethernet services, **characterized by**, comprising:
(1) adding an additional segment in an Ethernet frame for identifying different user services, the segment consisting of n bytes and n having a value related to the format of the segment;
(2) entering a user service into data networks of a service provider, and adding a user ID in the additional segment of the Ethernet frame carrying the user service;
(3) processing switch/route; and
(4) when the user service leaves the data networks performing the following steps:
- deleting the user ID and restoring the Ethernet frame, and
- processing the user service, which leaves the data networks through a certain physical interface, on said certain physical interface, comparing the user ID of the user service leaving the data network with the user ID of said physical interface, and letting the user service go through if the two IDs conform to each other, otherwise discarding the service.

2. The method according to claim 1, wherein in the step (2), the user service entering into a physical interface is marked in a certain format by a user ID assigned to the physical interface connecting the user service.

3. The method according to claim 1 or 2, wherein in the step (3):
based on the user IDs, a unique MAC address table is maintained for each user ID by learning and searching MAC addresses; a unique spanning-tree is generated on the physical interface included in each user ID to form a real virtual bridge; in said virtual bridge same MAC addresses may be used in MAC address tables of different user IDs.

4. The method according to claim 1, wherein in the step (3), a unique spanning-tree is generated for each user ID to avoid broadcast storm.

5. The method according to claim 1, wherein in the step (3):
the uses of VLAN IDs for different user IDs are completely isolated, and a user use VLAN IDs to realize internal network isolation.

6. The method according to claim 5, wherein in the step (3):
at the physical interfaces connecting the user service, internal service isolation is set upon whether using the VLAN ID or not by selecting ways of using the VLAN ID through network management.

7. The method according to claim 1, wherein in the step (3):
a unique multicast service mode is provided for each user ID, in which the multicast service mode comprise a dynamic multicast protocol mode and a static multicast configuration mode;
the dynamic multicast protocol mode means that a service interface in the multicast service is determined by the dynamic multicast protocol, and the dynamic multicast protocol comprises Protocol ICMP and Protocol GMRP (Refer to RFC 2236 and IEEE 802. 1q);
the static multicast configuration mode determines the service interface in the multicast service by manual configuration of the user through network management.

8. The method according to claim 7, wherein in the step (3), each user ID configures the multicast service mode by means of network management, and the service mode to be selected includes the dynamic multicast protocol mode and the static multicast configuration mode.

9. The method according to claim 1, wherein in the step (2), a user ID is assigned to each physical interface, when entering the interface a service is marked with a user ID, the user ID keeps unchanged in the whole network until the service leaves the interface and reaches a user device, and then the user ID is removed, and finally the service reaches the user device, whereby the service is transferred transparently.

10. The method according to claim 1, wherein the additional segment in the Ethernet frame uses a format including compatible MPLS format, stackable VLAN format or custom format, to realize connection among a plurality of devices.

11. The method according to claim 10, wherein configuration options are set at the physical interfaces through network management to provide compatible MPLS, stackable VLAN and custom formats to the additional segment in the Ethernet frame.

## Patentansprüche

1. Verfahren zum Ausführen einer Sicherheitsisolierung von Ethernet-Diensten, **dadurch gekennzeichnet, dass** es umfasst:
(1) Hinzufügen eines zusätzlichen Segments in einem Ethernet-Frame zur Identifizierung verschiedener Benutzerdienste, wobei das Segment aus n Bytes besteht und n einen Wert hat, der sich auf das Format des Segments bezieht;
(2) Eingeben eines Benutzerdienstes in Datennetzwerke eines Dienstanbieters und Hinzufügen einer Benutzer-ID im zusätzlichen Segment des Ethernet-Frames, das den Benutzerdienst trägt;
(3) Verarbeiten eines Schalters/einer Route; und
(4) wenn der Benutzerdienst die Datennetzwerke verlässt, Durchführen der folgenden Schritte:
- Löschen der Benutzer-ID und Wiederherstellen des Ethernet-Frames und
- Verarbeiten des Benutzerdienstes, der die Datennetzwerke durch eine gewisse physische Schnittstelle verlässt, auf der gewissen physischen Schnittstelle, Vergleichen der Benutzer-ID des Benutzerdienstes, der das Datennetzwerk verlässt, mit der Benutzer-ID der physischen Schnittstelle und Durchlassen des Benutzerdienstes, falls die zwei IDs einander entsprechen, andernfalls Verwerfen des Dienstes.

2. Verfahren nach Anspruch 1, wobei in Schritt (2) der Benutzerdienst, der in eine physische Schnittstelle eintritt, in einem gewissen Format durch eine Benutzer-ID markiert wird, die der physischen Schnittstelle zugewiesen ist, die den Benutzerdienst verbindet.

3. Verfahren nach Anspruch 1 oder 2, wobei in Schritt (3):
basierend auf den Benutzer-IDs eine einzigartige MAC-Adressentabelle für jede Benutzer-ID, durch Lernen und Suchen von MAC-Adressen geführt wird; ein einzigartiger Spanning-Tree auf der physischen Schnittstelle generiert wird, die in jeder Benutzer-ID enthalten ist, um eine reale virtuelle Brücke zu bilden; in der virtuellen Brücke dieselben MAC-Adressen in MAC-Adressentabellen verschiedener Benutzer-IDs verwendet werden können.

4. Verfahren nach Anspruch 1, wobei in Schritt (3) ein einzigartiger Spanning-Tree für jede Benutzer-ID generiert wird, um einen Rundfunksturm zu verhindern.

5. Verfahren nach Anspruch 1, wobei in Schritt (3):
die Verwendungen von VLAN-IDs für verschiedene Benutzer-IDs vollständig isoliert sind und ein Benutzer VLAN IDs zur Ausführung einer internen Netzwerkisolierung verwendet.

6. Verfahren nach Anspruch 5, wobei in Schritt (3):
an den physischen Schnittstellen, die den Benutzerdienst verbinden, eine interne Dienstisolierung abhängig davon eingerichtet wird, ob die VLAN ID verwendet wird oder nicht, indem Möglichkeiten, die VLAN ID zu verwenden, durch Netzwerkmanagement gewählt werden.

7. Verfahren nach Anspruch 1, wobei in Schritt (3):
ein einzigartiger Gruppenrufdienstmodus für jede Benutzer-ID bereitgestellt wird, wobei der Gruppenrufdienstmodus einen dynamischen Gruppenrufprotokollmodus und einen statischen Gruppenrufkonfigurationsmodus umfasst;
der dynamische Gruppenrufprotokollmodus bedeutet, dass eine Dienstschnittstelle im Gruppenrufdienst durch das dynamische Gruppenrufprotokoll bestimmt wird und das dynamische Gruppenrufprotokoll Protokoll ICMP und Protokoll GMRP umfasst (siehe RFC 2236 und IEEE 802. 1q);
der statische Gruppenrufkonfigurationsmodus die Dienstschnittstelle im Gruppenrufdienst durch manuelle Konfiguration des Benutzers durch Netzwerkmanagement bestimmt.

8. Verfahren nach Anspruch 7, wobei in Schritt (3) jede Benutzer-ID den Gruppenrufdienstmodus durch Netzwerkmanagement bestimmt und der zu wählende Dienstmodus den einen dynamischen Gruppenrufprotokollmodus und den statischen Gruppenrufkonfigurationsmodus enthält.

9. Verfahren nach Anspruch 1, wobei in Schritt (2) jeder physischen Schnittstelle eine Benutzer-ID zugewiesen wird, beim Eintritt in die Schnittstelle ein Dienst mit einer Benutzer-ID markiert wird, die Benutzer-ID im gesamten Netzwerk unverändert bleibt, bis der Dienst die Schnittstelle verlässt und eine Benutzervorrichtung erreicht, und dann die Benutzer-ID entfernt wird und schließlich der Dienst die Benutzervorrichtung erreicht, wodurch der Dienst transparent übertragen wird.

10. Verfahren nach Anspruch 1, wobei das zusätzliche Segment Ethernet-Frame ein Format verwendet, das ein kompatibles MPLS-Format, stapelbares VLAN-Format oder kundenspezifisches Format enthält, um eine Verbindung unter mehreren Vorrichtungen auszuführen.

11. Verfahren nach Anspruch 10, wobei Konfigurationsoptionen an den physischen Schnittstellen durch Netzwerkmanagement eingerichtet werden, um dem zusätzlichen Segment im Ethernet-Frame kompatible MPLS-, stapelbare VLAN- und kundenspezifische Formate bereitzustellen.

## Revendications

1. Procédé de réalisation d'une isolation de sécurité de services Ethernet, **caractérisé en ce qu'**il comprend :
(1) l'ajout d'un segment supplémentaire dans une trame Ethernet pour l'identification de différents services d'utilisateur, le segment se composant de n octets, n ayant une valeur liée au format du segment ;
(2) l'entrée d'un service d'utilisateur dans des réseaux de données d'un fournisseur de services, et l'ajout d'un identifiant d'utilisateur dans le segment supplémentaire de la trame Ethernet portant le service d'utilisateur ;
(3) le traitement d'un commutateur/itinéraire ; et
(4) lorsque le service d'utilisateur quitte les réseaux de données, l'exécution des étapes suivantes :
- la suppression de l'identifiant d'utilisateur et la restauration de la trame Ethernet, et
- le traitement du service d'utilisateur qui quitte les réseaux de données par l'intermédiaire d'une certaine interface physique, la comparaison, sur ladite certaine interface physique, de l'identifiant d'utilisateur du service d'utilisateur quittant le réseau de données à l'identifiant d'utilisateur de ladite interface physique, et l'autorisation au service d'utilisateur de passer si les deux identifiants sont conformes l'un à l'autre, sinon le rejet du service.

2. Procédé selon la revendication 1, dans lequel, à l'étape (2), le service d'utilisateur entrant dans une interface physique est marqué dans un certain format par un identifiant d'utilisateur assigné à l'interface physique connectant le service d'utilisateur.

3. Procédé selon la revendication 1 ou 2, dans lequel, à l'étape (3) :
sur la base des identifiants d'utilisateur, une table d'adresses MAC unique est maintenue pour chaque identifiant d'utilisateur par l'apprentissage et la recherche d'adresses MAC ; un arbre recouvrant unique est généré sur l'interface est physique incluse dans chaque identifiant d'utilisateur pour former un pont virtuel réel ; dans ledit pont virtuel, les mêmes adresses MAC peuvent être utilisées dans des tables d'adresses MAC de différents identifiants d'utilisateur.

4. Procédé selon la revendication 1, dans lequel, à l'étape (3), un arbre recouvrant unique est généré pour chaque identifiant d'utilisateur pour éviter une tempête de diffusion.

5. Procédé selon la revendication 1, dans lequel, à l'étape (3) :
les utilisations d'identifiants de VLAN pour différents identifiants d'utilisateur sont complètement isolées et un utilisateur utilise des identifiants de VLAN pour réaliser une isolation de réseau interne.

6. Procédé selon la revendication 5, dans lequel, à l'étape (3) :
aux interfaces physiques connectant le service d'utilisateur, une isolation de service interne est réglée à l'utilisation ou non de l'identifiant de VLAN par la sélection de manières d'utiliser l'identifiant de VLAN par l'intermédiaire d'une gestion de réseau.

7. Procédé selon la revendication 1, dans lequel, à l'étape (3) :
un mode de service de multidiffusion unique est fourni pour chaque identifiant d'utilisateur, dans lequel le mode de service de multidiffusion comprend un mode de protocole de multidiffusion dynamique et un mode de configuration de multidiffusion statique ;
le mode de protocole de multidiffusion dynamique signifie qu'une interface de service dans le service multidiffusion est déterminée par le protocole de multidiffusion dynamique, et le protocole de multidiffusion dynamique comprend le protocole ICMP et le protocole GMRP (cf. RFC 2236 et IEEE 802.1q) ;
le mode de configuration de multidiffusion statique détermine l'interface de service dans le service de multidiffusion par une configuration manuelle de l'utilisateur par l'intermédiaire d'une gestion de réseau.

8. Procédé selon la revendication 7, dans lequel, à l'étape (3), chaque identifiant d'utilisateur configure le mode de service de multidiffusion au moyen d'une gestion de réseau, et le mode de service à sélectionner comprend le mode de protocole de multidiffusion dynamique et le mode de configuration de multidiffusion statique.

9. Procédé selon la revendication 1, dans lequel, à l'étape (2), un identifiant d'utilisateur est assigné à chaque interface physique, un service est marqué avec un identifiant d'utilisateur à l'entrée dans l'interface, l'identifiant d'utilisateur reste inchangé dans tout le réseau jusqu'à ce que le service quitte l'interface et atteigne un dispositif d'utilisateur, puis l'identifiant d'utilisateur est supprimé, et le service atteint le dispositif d'utilisateur, de telle façon que le service soit transféré de manière transparente.

10. Procédé selon la revendication 1, dans lequel le segment supplémentaire dans la trame Ethernet utilise un format comprenant un format MPLS compatible, un format VLAN empilable ou un format personnalisé, pour réaliser une connexion parmi une pluralité de dispositifs.

11. Procédé selon la revendication 10, dans lequel des options de configuration sont réglées aux interfaces physiques par l'intermédiaire d'une gestion de réseau pour fournir un format MPLS compatible, un format VLAN empilable et un format personnalisé au segment supplémentaire dans la trame Ethernet.
